# EUROPÄISCHE PATENTSCHRIFT

(11) **EP 2 760 795 B1**
(45) Veröffentlichungstag und Bekanntmachung des Hinweises auf die Patenterteilung: **23.08.2017**
(21) Anmeldenummer: 12766647.7
(22) Anmeldetag: 28.09.2012
(51) Int. Cl.: C01G 49/06

(54) **VERBESSERTES VERFAHREN ZUR HERSTELLUNG VON FEINTEILIGEM HÄMATIT UND VON EISENOXID-ROTPIGMENTEN**
IMPROVED METHOD FOR PRODUCING PARTICULATE HEMATITE AND IRON OXIDE RED PIGMENTS
PROCÉDÉ AMÉLIORÉ POUR LA FABRICATION D'HÉMATITE EN PARTICULES FINES ET DE PIGMENTS D'OXYDE DE FER ROUGES

(30) Priorität: 30.09.2011 EP 11183605
(43) Veröffentlichungstag der Anmeldung: 06.08.2014
(73) Patentinhaber: Lanxess Deutschland GmbH, 50569 Köln (DE)
(72) Erfinder: KETTELER, Guido, 40627 Düsseldorf (DE); HOLTMANN, Udo, 51375 Leverkusen (DE); KISCHKEWITZ, Juergen, 40883 Ratingen (DE)
(86) Internationale Anmeldenummer: PCT/EP2012/069181
(87) Internationale Veröffentlichungsnummer: WO 2013/045608

(56) Entgegenhaltungen:
- EP-A1- 1 293 480
- EP-A2- 1 106 577
- US-A1- 2008 181 843
- SHEN QING ET AL: "THE PREPARATION OF CRYSTAL SEEDS OF IRON OXIDE RED MADE BY NITRIC ACID METHOD AND ITS INFLUENCE OF OXIDATION.", INORGANIC CHEMICALS INDUSTRY, Bd. 6, 1997, Seiten 5-6, XP009157847,

## Beschreibung

Die vorliegende Erfindung betrifft ein verbessertes Verfahren zur Herstellung von feinteiligem Hämatit und von aus dem feinteiligem Hämatit aufgebauten Eisenoxid-Rot-Pigmenten.

Eisenoxide finden in vielen technischen Bereichen eine Anwendung. So werden sie beispielsweise als Farbpigmente in Keramiken, Baustoffen, Kunststoffen, Lacken und Papier eingesetzt, dienen als Grundlage für verschiedene Katalysatoren oder Trägermaterialien, können Schadstoffe adsorbieren oder absorbieren. Magnetische Eisenoxide finden Anwendungen in Magnetspeichermedien, Tonern, Ferrofluiden oder in medizinischen Anwendungen wie beispielsweise als Kontrastmittel für die Magnetresonanztomografie.

Für viele dieser Anwendungen spielt die Teilchengröße der Eisenoxid-Teilchen eine entscheidende Rolle. Partikel, die eine Teilchengröße kleiner als oder gleich 100 nm besitzen, sind erforderlich für Anwendungen, in denen der technische Effekt von der Oberfläche der Teilchen bestimmt wird. Eisenoxide mit einer Teilchengröße kleiner als oder gleich 100 nm werden im Zusammenhang mit dieser Erfindung als feinteilige Eisenoxide oder feinteilige Eisenoxid-Partikel, oder wenn das Eisenoxid Hämatit ist, als feinteilige Hämatite bezeichnet. Diese werden z.B. für katalytische Anwendungen, oder in den Bereichen Adsorption bzw. Absorption oder Sensoren eingesetzt. Superparamagnetische oder weichmagnetische Materialien werden z.B. in medizinischen Anwendungen eingesetzt. Transparente Pigmente, deren Teilchengröße kleiner ist als die Wellenlänge des sichtbaren Lichts rufen aufgrund der geringen Streuung des Lichtes einen transparenten Farbeindruck hervor, der in erster Linie durch die Absorption bestimmt wird.

Für alle diese Anwendungsbeispiele ist die Herstellung einer definierten Teilchengröße von entscheidender Bedeutung. Die Herstellung von hochwertigem, feinteiligen Eisenoxid mit einer definierten Teilchengröße in einem großtechnischen Maßstab ist jedoch aufwändig.

Es gibt eine Reihe von Herstellmethoden für feinteiliges Eisenoxid, die sich im Wesentlichen in folgende Gruppen unterteilen lassen:
1. Mechanische Methoden
2. Gasphasen-Methoden
3. Flüssigphasenmethoden

Wie im Folgenden dargelegt wird, sind alle bestehenden Methoden mit den Nachteilen verbunden, dass der Herstellprozess entweder sehr aufwändig und Energie-intensiv ist, dass die Nebenprodukte aufwändig abgetrennt werden müssen, dass hohe Anforderungen an die einzusetzenden Werkstoffe und Rohstoffe bezüglich deren Zusammensetzung gestellt werden müssen, dass das erhaltene feinteilige Eisenoxid nicht in hoher Reinheit erhalten werden kann, und / oder dass die Produkte nur mit einem geringem Umsatz erhalten werden können. Es besteht daher nach wie vor der Bedarf, ein einfaches, ökonomisches, wässriges Verfahren bereit zu stellen, das nicht auf eine spezielle Rohstoffqualität angewiesen ist, und trotzdem hochreines, feinteiliges Eisenoxid, im Speziellen feinteiliges Eisenoxid der Modifikation Hämatit, liefert. Dieses wird z.B. in Pigmentaufbauverfahren zur Herstellung von Eisenoxid-Rot-Pigmenten eingesetzt.

Durch mechanische Methoden (Mahlungen) ist feinteiliges Eisenoxid schwer zugänglich, und es kommt häufig zu einer Verunreinigung durch Abrieb des Mahlkörpers. Feinteiliges Eisenoxid, im Speziellen feinteiliges Eisenoxid der Modifikation Hämatit, besitzt eine hohe Oberflächenenergie, so dass mit abnehmender Teilchengröße zunehmend mehr Energie für eine Zerkleinerung in feinteilige Primärteilchen aufgewendet werden muss, daher sind mechanische Herstellverfahren für feinteilige Partikel sehr Energie-intensiv und nicht gut geeignet.

Gasphasenmethoden beinhalten die chemische Gasphasenabscheidung, Laser-Ablations-Deposition, Sputtering-Techniken, oder Glühungen bei hohen Temperaturen. Wird hierzu ein feinteiliges anderes Eisenoxid eingesetzt und verglüht, so finden sich in der Regel Glühbedingungen, unter denen auch ein feinteiliger Hämatit erhalten wird [z.B. US5004504, US5614012]. Diese Teilchen lassen sich im großtechnischen Maßstab herstellen, und werden als transparente Pigmente eingesetzt. Diese Methoden verwenden in der Regel hohe Temperaturen, wodurch sich harte Aggregate bilden können, die eine nachfolgende mechanische Behandlung erfordern und sich nur schwer und unter hohem Energieaufwand in die feinteiligen Primärteilchen zerlegen lassen.

Durch die thermische Zersetzung von Eisencarbonyl oder Fe-organischen Precursor-Verbindungen können aber sehr wohl sehr feinteilige Eisenoxid-Teilchen bei moderaten Temperaturen erhalten werden [A. Shavel, L.M. Liz-Marzän, Phys. Chem. Chem. Phys. 11 (2009), 3762.]. Diese Synthesen haben den Nachteil, dass die eingesetzten metall-organischen Verbindungen nicht in großen Mengen verfügbar sind, teuer sind, und dass die organischen Nebenprodukte der Reaktion eine aufwändige Abtrennung erfordern.

Die Synthese in flüssiger Phase ist für die Herstellung von feinteiligem Eisenoxid in der Regel wesentlich besser geeignet. Hierunter fallen eine ganze Reihe von Methoden wie Fällungs- und Hydrolysereaktionen, hydro- und solvothermale Synthesen, Sol-Gel-Prozesse und Mikroemulsions-Methoden.

Zur Herstellung in flüssiger Phase können Synthesen in wässrigen und nicht-wässrigen Flüssigkeiten unterschieden werden. Synthesen in nicht-wässriger Phase besitzen den großen Nachteil, dass die nicht-wässrigen Lösungsmittel eine aufwändige Abtrennung und Aufreinigung des Abwassers erfordern, und in der Regel aufgrund ihrer Brennbarkeit erhebliche Anforderungen an die Arbeitssicherheit stellen. Es ist wünschenswert, eine robuste, rein wässrige Methode zu entwickeln, die keine hohen Anforderungen an die eingesetzten Rohstoffe stellt.

Eisenoxide lassen sich durch wässrige Fällungs- und Hydrolysereaktionen von Eisensalzen erhalten (Ullmann's Encyclopedia of Industrial Chemistry, VCH Weinheim 2006, Chapter 3.1.1. Iron Oxide Pigments, S. 61-67). Eisenoxidpigmente über den Fällungsprozess werden aus Eisensalzlösungen und alkalischen Verbindungen in Gegenwart von Luft erzeugt. Durch gezielte Steuerung der Reaktion lassen sich so auch feinteilige Goethit-, Magnetit- und Maghämit-Partikel darstellen.

Die wässrige Herstellung von feinteiligem Hämatit, der der Modifikation α-Fe₂O₃ entspricht, ist jedoch deutlich aufwändiger. Durch Verwendung eines Reifungsschritts lässt sich unter Zugabe eines feinteiligen Eisenoxids der Modifikation Maghämit, γ-Fe₂O₃, oder Lepidocrocite, γ-FeOOH, als Keim auch durch eine direkte wässrige Fällung Hämatit herstellen [US 5,421,878; EP0645437, WO 2009/100767], jedoch kann auf diese Weise kein feinteiliger Hämatit im Sinne dieser Erfindung, d.h. mit einer Teilchengröße kleiner als oder gleich 100 nm, erhalten werden.

Eine weitere Methode zur Herstellung von Eisenoxid-Rot-Pigmenten ist der sogenannte Penniman-Prozess (US 1,327,061; US 1,368,748; US 2,937,927, EP 1106577A, US 6,503,315). Dabei werden Eisenoxidpigmente dadurch hergestellt, dass Eisenmetall unter Zusatz eines Eisenoxidkeims gelöst und oxidiert wird. So ist in SHEN, Qing; SUN, Fengzhi; Wujiyan Gongye 1997, (6), 5 - 6 (CH), Wujiyan Gongye Bianjib, (CA 128:218378n) ein Verfahren bekannt geworden, bei dem verdünnte Salpetersäure bei erhöhter Temperatur auf metallisches Eisen einwirkt. Hierbei entsteht eine Hämatitkeim-Suspension. Diese wird auf an sich bekannte Weise zu einer Suspension von Rotpigment aufgebaut, das Pigment wird aus dieser Suspension falls gewünscht auf an sich übliche Weise isoliert. Die durch dieses Verfahren hergestellten Rotpigmente weisen jedoch eine vergleichsweise geringe Farbsättigung auf, die ähnlich der Farbsättigung einer kommerziellen 130er-Norm sind, und finden ihren Einsatz deshalb vornehmlich in der Baustoffindustrie. EP 1106577A offenbart eine Variante des Penniman-Verfahrens umfassend die Einwirkung von verdünnter Salpetersäure auf metallisches Eisen bei erhöhter Temperatur zur Erzeugung von Keimen, d.h. feinteiligen Eisenoxiden mit einer Teilchengröße kleiner als oder gleich 100 nm. Die Reaktion von metallischem Eisen mit Salpetersäure ist eine komplexe Reaktion und kann je nach Versuchsbedingungen entweder zu einer Passivierung des Eisens und damit einem Stillstand der Reaktion führen, oder zu einem Auflösen des Eisens unter Bildung von gelöstem Eisennitrat führen.

Beide Reaktionswege sind nicht erwünscht, und die Herstellung von feinteiligem Hämatit gelingt nur unter eingeschränkten Versuchsbedingungen. EP 1106577A beschreibt derartige Versuchsbedingungen zur Herstellung von feinteiligem Hämatit. Dabei wird das metallische Eisen mit verdünnter Salpetersäure bei Temperaturen zwischen 90 und 99°C zur Reaktion gebracht. Es wurde nun gefunden, dass diese Herstellmethode eine gute mechanische Durchmischung der Reaktionsmischung erfordert, da unter diesen Bedingungen ohne eine mechanische Durchmischung der Reaktionspartner nur geringe Umsätze bei langen Reaktionszeiten erzielt werden können. Um eine gute mechanische Durchmischung zu gewährleisten, ist ein aufwändiges Reaktordesign notwendig. Außerdem schwanken unter diesen Reaktionsbedingungen die Umsätze an Eisen in Bezug auf die eingesetzte Salpetersäure, d.h. das Verfahren verläuft nicht stabil. Es hat sich herausgestellt, dass unter diesen Bedingungen auch die Qualität des eingesetzten Eisens einen Einfluss auf die Umsätze an Eisen in Bezug auf die eingesetzte Salpetersäure ausübt und damit den Reaktionsverlauf von Reaktion zu Reaktion noch unvorhersehbarer und unzuverlässiger macht.

Der Erfindung lag die Aufgabe zugrunde, ein robustes, stabiles und ökonomisches, wässriges Verfahren zur Herstellung von feinteiligem Hämatit bereitzustellen, das mit einem hohen Umsatz hochreinen, feinteiligen Hämatit liefert, aus dem in einem nachgeschalteten PigmentaufbauVerfahren chemisch hochreine, brillante und farbstarke Eisenoxid-Rot-Pigmente hergestellt werden können.

Es wurde nun als Lösung dieser komplexen Aufgabe ein Verfahren zur Herstellung von feinteiligem Hämatit mit einer Teilchengröße kleiner als oder gleich 100 nm und einer spezifischen BET-Oberfläche von 40 m²/g bis 150 m²/g, gemessen nach DIN 66131, gefunden, umfassend zumindest die Schritte
a) Bereitstellen einer Mischung von metallischem Eisen und Wasser mit einer Temperatur von 60 bis 120°C,
b) Zugabe von verdünnter Salpetersäure zu der Mischung aus Schritt a) wobei die Reaktionsmischung eine maximale Temperatur von 105 bis 160°C erreicht,
c) Abtrennung der wässrigen Suspension von feinteiligem Hämatit von gegebenenfalls nicht umgesetztem, metallischen Eisen
d) gegebenenfalls Isolierung des feinteiligen Hämatit aus der abgetrennten wässrigen Suspension,

Bevorzugt gilt das Kriterium der Teilchengröße dann als erfüllt, wenn 90% der Teilchen eine Teilchengröße von kleiner als oder gleich 100 nm, besonders bevorzugt von 30 nm bis 90 nm, aufweisen.

Bevorzugt erfolgt in Schritt b) die Zugabe von verdünnter Salpetersäure mit solch einer Zugaberate zu der Mischung aus Schritt a), so dass sich die Reaktionsmischung vorzugsweise auch ohne externe Wärmezufuhr innerhalb von weniger als 120 min. nach Beendigung der Salpetersäurezugabe um mindestens 15°C aufheizt. Ebenfalls bevorzugt erfolgen die Schritte a) und b) in einem geschlossenen, druckdichten Behälter. Ebenfalls bevorzugt wird nach Beendigung der Zugabe der verdünnten Salpetersäure in Schritt b) vor Durchführung des Schrittes c) abgewartet, bis die Reaktionstemperatur auf weniger als 100°C gesunken ist.

Die Erfindung umfasst jede denkbare Kombination der verschiedenen definierten Verfahrens- und Stoffparameter und ihrer Vorzugsbereiche

Besonders bevorzugt umfasst das erfindungsgemäße Verfahren zur Herstellung von feinteiligem Hämatit, wobei der feinteilige Hämatit eine Teilchengröße kleiner als oder gleich 100 nm und eine spezifische BET-Oberfläche von 40 m²/g bis 150 m²/g, bevorzugt von 60 m²/g bis 120 m²/g gemessen nach DIN 66131 aufweist, die Schritte
a) Aufheizen einer Mischung von metallischem Eisen und Wasser auf 60 bis 120°C, bevorzugt von 75 bis 120°C, in einem geschlossenen, druckdichten Behälter,
b) Zugabe von verdünnter Salpetersäure mit solch einer Zugaberate zu der Mischung aus Schritt a), so dass die Reaktionsmischung sich auch ohne externe Wärmezufuhr innerhalb von weniger als 120 min., bevorzugt weniger als 90 min., nach Beendigung der Salpetersäurezugabe um mindestens 15°C, bevorzugt um mehr als 20°C, besonders bevorzugt mehr als 30°C, aufheizt, und die Reaktionsmischung eine maximale Temperatur von 105 bis 160°C, bevorzugt von 120 bis 160°C, erreicht,
c) Abwarten bis die Reaktionstemperatur auf weniger als 100°C gesunken ist,
d) Abtrennung der wässrigen Suspension von feinteiligem Hämatit vom metallischen Eisen und
e) gegebenenfalls Isolierung des feinteiligen Hämatit aus der abgetrennten wässrigen Suspension,

Es wurde zudem gefunden, dass durch die erfindungsgemäße Verfahrensweise wesentlich höhere Umsätze des eingesetzten metallischen Eisens möglich sind. Bezogen auf die Ausgangsstoffe Eisen und Salpetersäure ist es wünschenswert, einen möglichst hohen Umsatz an Eisen zu feinteiligem Hämatit relativ zur eingesetzten Salpetersäure zu erreichen. Dies führt zu einem deutlich umweltfreundlicheren Verfahren, da weniger Rohstoff (HNO₃) verbraucht wird und weniger schädliche Nebenprodukte in Form von Ammoniumnitrat (NH₄NO₃) und Stickoxiden (NOx) entstehen. Als Kennzahl für den Umsatz dient dafür das Verhältnis an umgesetztem Eisen (berechnet in mol) pro eingesetzter Salpetersäure (berechnet in mol). Diese Kennzahl wird im Zusammenhang mit dieser Erfindung als molarer Umsatzfaktor bezeichnet. Durch das erfindungsgemäße Verfahren können molare Umsatzfaktoren von mehr als 1,3 erreicht werden, d.h. pro eingesetztem mol HNO₃ werden mehr als 1,3 mol Eisen zu feinteiligem Hämatit umgesetzt. Die Ermittlung dieses molaren Umsatzfaktors ist im Abschnitt Methoden beschrieben. Dieser hohe molare Umsatzfaktor wird auch mit einer höheren Zuverlässigkeit erreicht als nach den Verfahren des Standes der Technik. Außerdem werden diese hohen molaren Umsatzfaktoren auch mit unterschiedlichen Eisenqualitäten als Rohstoff erreicht.

Im Folgenden wird das erfindungsgemäße Verfahren detaillierter beschrieben.

In diesem Verfahren wird in Schritt a) zunächst metallisches Eisen und Wasser in einem Reaktor, bevorzugt in einem säure- und druckbeständigen Reaktor, vorgelegt und auf eine Temperatur von 60 bis 120°C, bevorzugt von 75 bis 120°C, ganz besonders bevorzugt von 75 bis 95°C, aufgeheizt. Dabei wird der Reaktor geschlossen, so dass Drücke von größer als 1000 hPa [1 bar] innerhalb des Reaktors auftreten können. In der Regel wird der Druck innerhalb des Reaktors durch sicherheitstechnische Maßnahmen (z.B. ein Überdruckventil) auf einen technisch beherrschbaren Druck begrenzt. Typische Drucke, die im Verfahren auftreten, betragen beispielsweise von 0,2 bis 1 MPa.

Als metallisches Eisen wird gewöhnlich Eisenschrott in Form von Draht, Blechen, Nägeln, oder groben Spänen eingesetzt. Dabei sind die einzelnen Teile von beliebiger Form und weisen üblicherweise eine Dicke (z.B. gemessen als Durchmesser eines Drahtes oder als Dicke eines Bleches) von ca. 0,1 Millimetern bis zu ca. 3 mm Millimetern auf. Die Größe von Drahtbündeln oder von Blechen, die in das Verfahren eingesetzt werden, bemisst sich üblicherweise nach praktikablen Gesichtspunkten. So muss der druckdichte Behälter mit diesem Einsatzmaterial ohne Schwierigkeiten befüllt werden können, was in der Regel durch ein Mannloch erfolgt.

Das im erfindungsgemäßen Verfahren eingesetzte metallische Eisen weist in der Regel einen Eisengehalt von >90% auf. Als Verunreinigungen treten in diesem Eisenschrott üblicherweise Fremdmetalle wie z.B. Mangan, Chrom, Silizium, Nickel, Kupfer, und andere Elemente auf. Es kann jedoch auch ohne Nachteile metallisches Eisen mit einem höheren Reinheitsgrad eingesetzt werden. Dagegen sind z.B. Eisenpulver für dieses Verfahren nicht gut geeignet, weil diese aufgrund der hohen Oberfläche eine zu starke Reaktivität besitzen und zu heftigen Reaktionen führen könnten. Metallisches Eisen wird im Rahmen der Erfindung auch als elementares Eisen bezeichnet.

Die Bereitstellung der Mischung gemäß Schritt a) erfolgt vorzugsweise durch Aufheizen einer Mischung von metallischem Eisen und Wasser. Nach dem Aufheizen wird in Schritt b) bevorzugt verdünnte Salpetersäure mit einer hohen Zugaberate zu der vorgeheizten Mischung von metallischem Eisen und Wasser, bevorzugt in einem geschlossenen, druckdichten Reaktor, gegeben. Eine mechanische Durchmischung der Reaktionspartner (z.B. durch Rühren oder Umpumpen) ist nicht erforderlich. Bevorzugt wird das erfindungsgemäße Verfahren ohne mechanische Durchmischung der Reaktionspartner durchgeführt.

Die in dem erfindungsgemäßen Verfahren in Schritt b) eingesetzte verdünnte Salpetersäure weist bevorzugt Konzentrationen von 10 bis 67 Gew.% HNO₃ auf, bevorzugt zwischen 20 und 67 Gew.% HNO₃. Es kann neben der Salpetersäure auch eine weitere Säure, z.B. Salzsäure oder Schwefelsäure eingesetzt werden. Bevorzugt wird neben der verdünnten Salpetersäure keine weitere Säure in diesen Verfahrensschritt eingesetzt. Dies bewirkt den Vorteil, dass das nach dem erfindungsgemäßen Verfahren erhältliche feinteilige Eisenoxid einen sehr geringen Schwefel- und Chlor-Gehalt aufweist. Dies ist für den Einsatz in Katalysatoren von Vorteil, da Schwefel und Chlor für einige Reaktionen bekannte Katalysator-Gifte darstellen. Die Salpetersäure wird zu dem im Wasser vorgelegten Eisenschrott gegeben, und wird durch das vorgelegte Wasser verdünnt. Die rechnerische Konzentration an zugegebener HNO₃, die sich ohne eine weitere chemische Reaktion in diesem Gemisch einstellen würde, liegt bevorzugt zwischen 2 und 15 Gew.-%. Wenn die rechnerische HNO₃-Konzentration unter 2 Gew.-% liegt, erfolgt kein ausreichender Umsatz zu Hämatit-Partikeln.

In der Regel werden pro mol HNO₃ größer als 1,33 bis 16 mol Eisen, bevorzugt 1,5 bis 4 mol, in Schritt a) vorgelegt. Eine Menge größer als 1,33 mol bis 1,8 mol Fe pro mol HNO₃ (abhängig vom erreichten molaren Umsatzfaktor) bedeutet für das erfindungsgemäße Verfahren einen Unterschuss an HNO₃. In diesem Fall bleibt nach vollständiger Umsetzung der HNO₃ typischerweise metallisches Eisen zurück. Nach Abtrennung der Suspension des feinteiligen Hämatit kann das im Reaktionsgefäß übrig gebliebene metallische Eisen in der nächsten Umsetzung erneut verwendet werden. Das im Reaktionsgefäß übrig gebliebene metallische Eisen kann auch zusammen mit frisch eingesetztem Eisen in der nächsten Umsetzung verwendet werden, so dass bei einer Fahrweise mit Salpetersäure-Unterschuss, d.h. Eisenüberschuss, über mehrere Ansätze eine vollständige Umsetzung der eingesetzten Rohstoffe erfolgt, und keine unverbrauchte Salpetersäure in der wässrigen Phase der Suspension des feinteiligen Hämatits zurück verbleibt, die neutralisiert oder aufwändig entsorgt werden muss oder die in Folgeumsetzungen zu unerwünschten Reaktionsverläufen führen könnte.

Die Zugaberate der Salpetersäure in Schritt b) wird so gewählt, dass es aufgrund der exothermen Reaktion der Salpetersäure mit dem metallischen Eisen zu einem Temperaturanstieg von mindestens 15°C, bevorzugt 20°C, ganz besonders bevorzugt um 30°C, kommt, und dass im Reaktionsverlauf in der Reaktionsmischung eine maximale Temperatur von 105°C bis 160°C, bevorzugt 120 bis 160 °C, erreicht wird. Bevorzugt wird Schritt b) des erfindungsgemäßen Verfahrens ohne eine externe Wärmezufuhr durchgeführt. Diese maximale Temperatur oder Höchsttemperatur sollte bevorzugt innerhalb von weniger als 120 min., besonders bevorzugt innerhalb von weniger als 90 min. nach Beendigung der Salpetersäurezugabe erreicht werden. Dabei steigt der Druck im Reaktor, bevorzugt im geschlossenen, druckdichten Reaktor auf über 0,1 MPa [1 bar], bevorzugt auf 0,11 bis 1 MPa [1,1 bis 10 bar]. Bei dieser Reaktion entstehen als Nebenprodukt unter anderem Stickoxide. Die Angabe einer absoluten Zugaberate in "x ml HNO₃ / Liter Ansatzvolumen" ist bei dieser Reaktion nicht möglich, da der Temperaturanstieg in der Reaktionsmischung während und nach der Salpetersäurezugabe neben der Zugaberate in "x ml HNO₃ / Liter Ansatzvolumen" von unterschiedlichen Parametern, wie der der Ansatzgröße, der thermischen Isolierung des Reaktionsbehälters oder die Art des eingesetzten metallischen Eisens abhängt. Je größer die Ansatzgröße, desto niedriger ist die erforderliche HNO₃-Zugaberate, um die Reaktionsmischung auf den nach den Ansprüchen geforderten Temperaturbereich zu bringen. Je höher die thermische Isolierung des Reaktionsbehälters ist, desto niedriger ist die erforderliche HNO₃-Zugaberate, um die Reaktionsmischung auf den nach den Ansprüchen geforderten Temperaturbereich zu bringen. Relevant für den hohen Umsatzfaktor, der bei dem erfindungsgemäßen Verfahren erzielt wird, ist nicht eine absolute Zugaberate in einem bestimmten Bereich, sondern die Temperaturerhöhung des Reaktionsansatzes auf die in den Ansprüchen genannten Werte, die durch die exotherme Reaktion der Salpetersäure mit dem metallischen Eisen, d.h. ohne äußere Wärmezufuhr, hervorgerufen wird. Der Fachmann wird die HNO₃-Zugaberate, die benötigt wird, um den nach den Ansprüchen geforderten Temperaturanstieg zu erreichen, in dem jeweiligen Reaktionsbehälter durch Vorversuche bestimmen.

Es ist bekannt, dass hohe Salpetersäurekonzentrationen eine Passivierung des Eisenschrotts bewirken können. Überraschenderweise bewirkt jedoch der schnelle Konzentrationsanstieg an HNO₃ nach dem erfindungsgemäßen Verfahren durch die hohe Zugaberate keine Passivierung des Eisens, sondern den technischen Vorteil, dass die Reaktion des metallischen Eisens mit der Salpetersäure deutlich schneller und vollständiger, aber trotzdem kontrollierbar verläuft und trotzdem zu hochreinem feinteiligen Hämatit führt. Auf diese Weise steigt der molare Umsatzfaktor nach dem erfindungsgemäßen Verfahren auf einen Wert zwischen 1,3 und 1,8. Für die beiden bekannten stöchiometrischen Reaktionen gemäß

(1) 2 Fe + 2 HNO₃ → Fe₂O₃ + 2 NO + H₂O

(2) 8 Fe + 6 HNO₃ + 3 H₂O → 4 Fe₂O₃ + 3 NH₄NO₃

berechnen sich die molaren Umsatzfaktoren zu 1,0 (Reaktionsgleichung 1) bzw. 1,33 (Reaktionsgleichung 2). Bei den mit dem erfindungsgemäßen Verfahren erzielten höheren Umsatzfaktoren müssen demnach auch andere Reaktionen ablaufen. Die molaren Umsatzfaktoren, die nach dem in EP 1106577A offenbarten Verfahren erreicht werden, liegen nach eigenen Untersuchungen bei weniger als 1,3, teilweise bei weniger als 1,0. Außerdem sind dort die Reaktionszeiten länger und damit die Raum-Zeit-Ausbeuten niedriger. Danach verläuft die Umsetzung des Eisens während dieses Verfahrens wahrscheinlich nach den Reaktionsgleichungen (1) und/oder (2) ab. Da bei der Herstellung von Eisenoxiden im industriellen Maßstab Eisenmengen im zwei- bis vierstelligen kg-Bereich pro Ansatz eingesetzt werden, bedeutet die Kombination aus den erreichten höheren Umsatzfaktoren zusammen mit den höheren Raum-Zeit-Ausbeuten und der erhöhten Prozessstabilität einen signifikanten Vorteil gegenüber den Verfahren gemäß dem Stand der Technik.

Wenn bei dem erfindungsgemäßen Verfahren durch die Umsetzung der Salpetersäure mit dem metallischen Eisen die Salpetersäurekonzentration sinkt, sinken auch die Temperatur und der Druck innerhalb des Reaktors, bevorzugt des geschlossenen, druckdichten Reaktors. Die Umsetzung wird fortgeführt, bis die Reaktionstemperatur auf weniger als 100°C gesunken ist. Da die Reaktion nach Erreichen der Maximaltemperatur größtenteils beendet ist, kann der Reaktor auch durch äußere Maßnahmen, z.B. Kühlen, auf eine Temperatur von weniger als 100°C gekühlt werden.

Nach beendeter Reaktion liegt der feinteilige Hämatit in wässriger Suspension vor und kann entweder als Suspension in weiteren Verfahren eingesetzt werden oder durch Sedimentation, Filtration oder Zentrifugation gewaschen und / oder als Feststoff isoliert werden.

Die Erfindung betrifft auch den feinteiligen Hämatit, der nach dem erfindungsgemäßen Verfahren erhalten wird. Der so hergestellte feinteilige Hämatit besteht entweder zu mehr als 99 Gew.% aus α-Fe₂O₃ oder kann gegebenenfalls auch Anteile von FeOOH, z.B. von kristallinem α-FeOOH (Goethit), von bis zu 5 Gew.%, bevorzugt weniger als 1 Gew.-% enthalten. Der nach dem erfindungsgemäßen Verfahren hergestellte feinteilige Hämatit weist eine spezifische BET-Oberfläche von 40 m²/g bis 150 m²/g, bevorzugt von 60 m²/g bis 120 m²/g auf (gemessen nach DIN 66131). Der nach dem erfindungsgemäßen Verfahren hergestellte Hämatit weist eine runde, ovale oder hexagonale Teilchenform auf und besitzt eine Teilchengröße zwischen 20 und 100 nm. Der feinteilige Hämatit weist eine hohe Reinheit auf, selbst wenn Eisen mit höheren Fremdmetallgehalten als Rohstoff eingesetzt wird. Als Fremdmetalle sind in Eisenschrott in der Regel Mangan, Chrom, Aluminium, Kupfer, Nickel, Kobalt, und/oder Titan in unterschiedlichsten Konzentrationen enthalten, die bei der Umsetzung mit Salpetersäure auch zu Oxiden oder Oxyhydroxiden gefällt und in den feinteiligen Hämatit eingebaut werden können, wobei die Einbauraten sehr unterschiedlich sind. Nach dem erfindungsgemäßen Verfahren wird z.B. Mangan mit einer Einbaurate von 0,5% oder weniger in den Hämatit eingebaut, d.h. bezogen auf den umgesetzten Eisenschrott werden 0,5% oder weniger des im Eisenschrott enthaltenen Mangans in das Pigment eingebaut. Wenn beispielsweise metallisches Eisen mit einem Mangan-Gehalt von 1000 ppm als Rohstoff eingesetzt wird, so enthält der nach dem erfindungsgemäßen Verfahren erhaltene feinteilige Hämatit bei einer Einbaurate von 0,5 % nur 5 ppm Mn, bezogen auf den Eisenanteil im Pigment.

Der nach dem erfindungsgemäßen Verfahren hergestellte hochreine feinteilige Hämatit bietet einen Vorteil für eine Reihe von technischen Anwendungen: Er ermöglicht das Wachstum besonders reiner und gut kristallisierter Pigmente, die deswegen besonders farbstark und brillant sind. Hochreiner, feinteiliger Hämatit mit einer hohen Oberfläche eignet sich gut für technische Anwendungen, bei denen die Reinheit eine große Rolle spielt, z.B. in Akkumulatoren, Batterien, medizinischen Anwendungen, als Sensor und ist von großer technischer Bedeutung für Katalysatoren, da viele Verunreinigungen selbst in geringen Mengen als Katalysatorgift wirken.

Die Erfindung betrifft auch ein Verfahren zu Herstellung von Eisenoxid-Rot-Pigmenten, in das der oben beschriebene feinteilige Hämatit als Keim eingesetzt wird.

Dieses Verfahren zur Herstellung von Eisenoxid-Rot-Pigmenten umfasst die Schritte
i. Herstellung einer wässrigen Suspension von feinteiligem Hämatit gemäß dem oben offenbarten erfindungsgemäßen Verfahren
ii. Umsetzung der wässrigen Suspension von feinteiligem Hämatit als Keim mit einem Eisensalz, einem alkalischen Fällungsmittel unter Einwirkung sauerstoffhaltiger Gase oder durch Reaktion von elementarem Eisen, einem Eisensalz und sauerstoffhaltigen Gasen zu einer Hämatit-Pigmentsuspension und
iii. gegebenenfalls Isolierung des in der Suspension enthaltenen Pigments oder auch nicht.

Als Eisensalze werden beispielsweise Eisen(II)sulfat, Eisen(II)nitrat, Eisen(III)nitrat oder Eisen(II)chlorid eingesetzt. Bevorzugt eingesetzt werden Eisen(II)nitrat und Eisen(II)sulfat, besonders bevorzugt Eisen(II)nitrat.

Die Eisensalze werden üblicherweise in Form ihrer wässrigen Lösungen eingesetzt.

Als alkalische Fällungsmittel können beispielsweise NaOH, KOH, Na₂CO₃, K₂CO₃, NH₃ oder NH₄OH oder andere Alkali- und Erdalkalihydroxide und -carbonate eingesetzt werden. Bevorzugt werden Alkalihydroxide oder Alkalicarbonate, besonders bevorzugt wird NaOH eingesetzt.

Die in dem erfindungsgemäßen Verfahren eingesetzten sauerstoffhaltigen Gase können beispielsweise Luft, Sauerstoff, NO₂, O₃ oder Gemische der genannten Gase sein. Bevorzugt ist Luft.

Die Isolierung des in der Suspension enthaltenen Pigments erfolgt durch Filtration und/oder Sedimentation und Trocknung.

In bevorzugten Ausführungsformen wird das Verfahren zur Herstellung von Eisenoxid-Rot-Pigmenten wie oben beschrieben durchgeführt, wobei zusätzlich
- die Umsetzung der wässrigen Suspension von feinteiligem Hämatit als Keim mit einem Eisensalz in Gegenwart von metallischem Eisen bei Temperaturen zwischen 70 und 100°C erfolgt, und/oder
- als Eisensalz eine wässrige Eisen(II)nitratlösung und gegebenenfalls eine wässrige Eisen(II)sulfatlösung eingesetzt wird und/oder
- die wässrige Suspension von feinteiligem Hämatit in einer Konzentration zwischen 1 und 50 g/l bezogen auf das Volumen der Reaktionsmischung zu Beginn der Reaktion, bevorzugt zwischen 5 und 40 g/l bezogen auf das Volumen der Reaktionsmischung zu Beginn der Reaktion eingesetzt wird, und/oder
- metallisches Eisen in einer Konzentration zwischen 20 und 100 g/l bezogen auf das Volumen der Reaktionsmischung zu Beginn der Reaktion eingesetzt wird, und/oder
- die Reaktionsmischung während des Aufheizens auf die Reaktionstemperatur und / oder während der Reaktion mit einem sauerstoffhaltigen Gas, bevorzugt Luft, zwischen 1 und 30 Litern pro Stunde und Liter Reaktionsvolumen für einen Zeitraum zwischen 2 und 150 Stunden begast wird.

Dabei wird die Konzentration der Eisen(II)nitratlösung in der Regel mit einer höher konzentrierten wässrigen Eisen(II)nitratlösung so eingestellt, dass sie bezogen auf das Volumen der Reaktionsmischung zu Beginn der Reaktion zwischen 5 und 100 g/l, bevorzugt zwischen 5 und 60 g/l liegt.

Bei dem Eisenoxid-Rot-Pigment, das nach dem erfindungsgemäßen Verfahren in den unterschiedlichen Ausführungsformen erhalten wird, es handelt sich um farbreine und farbstarke Pigmente, wie sie auch nach dem Verfahren gemäß der EP 1106577A erhalten werden. Auch die nach dem erfindungsgemäßen Verfahren hergestellten Rotpigmente zeigen in der Farbabtestung eine Farbsättigung (C*) von mehr als 39 CIELAB-Einheiten.

Bevorzugt lassen sich die nach dem erfindungsgemäßen Verfahren hergestellten Eisenoxid-Rot-Pigments zur Einfärbung von Erzeugnissen der Farben-, Lack-, Beschichtungs-, Baustoff-, Kunststoff- oder Papierindustrie, von Lebensmitteln, Einbrenn- oder Coil-Coat-Lacken, Sandgranulaten, Kalksandsteinen, Emaille, Keramik-Glasuren, Asphalt oder Rindenmulch, oder von Produkten der Pharmaindustrie, bevorzugt von Tabletten, oder die Verwendung als Adsorptionsmittel, Sensor, Katalysator, oder die Verwendung als Komponente in Batterien oder Akkumulatoren, Elektroden oder für die Verwendung als Rohstoff zur Herstellung anderer Eisenoxide oder Eisenchemikalien einsetzen.

Bei einem solchen Verfahren zur Einfärbung von Erzeugnissen der Farben-, Lack-, Beschichtungs-, Baustoff-, Kunststoff- oder Papierindustrie, von Lebensmitteln, Einbrenn- oder Coil-Coat-Lacken, Sandgranulaten, Kalksandsteinen, Emaille, Keramik-Glasuren, Asphalt oder Rindenmulch, oder von Produkten der Pharmaindustrie, bevorzugt von Tabletten, welche die nach dem erfindungsgemäßen Verfahren hergestellten feinteiligen Hämatit oder dem nach dem erfindungsgemäßen Verfahren hergestellten Eisenoxid-Rot-Pigment eingesetzt, wobei die Einfärbung nach an sich bekannten Methoden erfolgt.

### Beispiele und Methoden

### I. Beschreibung der verwendeten Mess- und Prüfmethoden

### I.1 Die spezifische BET-Oberfläche wurde nach DIN 66131 gemessen.

### I.2 Molarer Umsatzfaktor

Der molare Umsatzfaktor, der aussagt, wie viele mol Eisen pro eingesetztem mol Salpetersäure umgesetzt werden, wird bestimmt, indem das in der Reaktion eingesetzte Eisen in trockenem Zustand vor Reaktionsbeginn gewogen wird, und das Eisen, das nach der Reaktion im Reaktor verblieben ist, gewogen wird. Dazu wird das feuchte Eisen nach der Reaktion von Pigmentresten abgespült, und bei 80°C für 24 h getrocknet, und nach dem Erkalten gewogen. Die Differenz zwischen dem eingesetzten und dem nach der Reaktion übrig gebliebenen, getrocknetem Eisenschrott wird in "mol Fe" umgerechnet und der Betrag von "mol Fe" durch die den Betrag von "mol HNO₃" (bezogen auf die Menge an eingesetzter HNO₃) geteilt, woraus sich der molare Umsatzfaktor ergibt.

### I.3 Mangan-Gehalt

Die Probe wird mit Säure versetzt und in der Mikrowelle gelöst bis die Probe vollständig aufgelöst wurde. Anschließend wird durch optische Emissionsspektrometrie mittels induktiv gekoppeltem Plasma (ICP-OES) der Mangangehalt gemessen. Über diese Methode können auch andere Fremdmetallgehalte gemessen werden.

### II. Beispiele

### Beispiel 1:

8,44 kg (151,1 mol) Eisen-Stanzbleche (Dicke 0,8 mm) werden in 61,3 kg Wasser vorgelegt und auf 80°C erwärmt. 18,67 kg 30 gew.-%ige Salpetersäure (88,9 mol) werden innerhalb von 10 min. mit einer Zugaberate von 1851 g/min. zugegeben. Die Menge an zugegebener Salpetersäure entspricht einer berechneten Anfangskonzentration von 7 Gewichts-% in der Reaktionsmischung. Die Temperatur der Reaktionsmischung steigt innerhalb von 20 min. nach dem Ende der Salpetersäurezugabe auf ein Maximum von 151°C, und der Druck steigt und wird auf 4,3 bar begrenzt. Es entsteht eine Suspension des Hämatits, aus der nach Filtration und Trocknung des Rückstandes 12,06 kg feinteiliger Hämatit erhalten werden. Der so erhaltene Hämatit weist eine BET-Oberfläche nach DIN 66131 von 48 m²/g auf. Der molare Umsatzfaktor an metallischem Eisen bezogen auf die eingesetzte Salpetersäure beträgt 1,7.

### Beispiel 2:

5,42 kg (97,1 mol) Eisen-Drahtstifte (Nägel) werden in 68,2 kg Wasser vorgelegt und auf 80°C erwärmt. 11,84 kg 30,4 gew.-%ige Salpetersäure (57,1 mol) werden innerhalb von 10 min. mit einer Zugaberate von 1174 g/min. zugegeben. Die Menge an zugegebener Salpetersäure entspricht einer berechneten Anfangskonzentration von 4,5 Gewichts-% in der Reaktionsmischung. Die Temperatur der Reaktionsmischung steigt innerhalb von 60 min. nach dem Ende der Salpetersäurezugabe auf ein Maximum von 125°C, und der Druck steigt und wird auf 4,5 bar begrenzt. Es entsteht eine Suspension des Hämatits, aus der nach Filtration und Trocknung des Rückstandes 6,54 kg feinteiliger Hämatit erhalten werden. Der so erhaltene Hämatit weist eine BET-Oberfläche nach DIN 66131 von 73 m²/g auf. Der molare Umsatzfaktor an metallischem Eisen bezogen auf die eingesetzte Salpetersäure beträgt 1,43.

### Beispiel 3:

8,44 kg (151,1 mol) Eisen-Drahtstifte (Nägel) werden in 61,3 kg Wasser vorgelegt und auf 95°C erwärmt. 18,67 kg 30 gew.-%ige Salpetersäure (88,9 mol) werden innerhalb von 10 min. mit einer Zugaberate von 1851 g/min. zugegeben. Die Menge an zugegebener Salpetersäure entspricht einer berechneten Anfangskonzentration von 7 Gewichts-% in der Reaktionsmischung. Die Temperatur der Reaktionsmischung steigt innerhalb von 30 min. nach dem Ende der Salpetersäurezugabe auf ein Maximum von 143°C, und der Druck steigt und wird auf 3,4 bar begrenzt. Es entsteht eine Suspension des Hämatits, aus der nach Filtration und Trocknung des Rückstandes 10,67 kg feinteiliger Hämatit erhalten werden. Der so erhaltene Hämatit weist eine BET-Oberfläche nach DIN 66131 von 51 m²/g auf. Der molare Umsatzfaktor an metallischem Eisen bezogen auf die eingesetzte Salpetersäure beträgt 1,5.

**Teilchengröße:** Die erfindungsgemäß hergestellten feinteiligen Hämatite weisen eine Teilchengröße von kleiner als oder gleich 100 nm auf. 90% der Teilchen der erfindungsgemäß hergestellten feinteiligen Hämatite weisen eine Teilchengröße von 30 bis 90 nm auf. Die Teilchengröße wird elektronenmikroskopisch bestimmt.

### Vergleichsbeispiel 4:

5,42 kg (97,1 mol) Eisen-Drahtstifte (Nägel) werden in 68,2 kg Wasser vorgelegt und auf 80°C erwärmt. 11,84 kg 30,4 gew.%ige Salpetersäure (57,1 mol) werden innerhalb von 59 min. mit einer Zugaberate von 200 g/min. zugegeben. Die Menge an zugegebener Salpetersäure entspricht einer berechneten Anfangskonzentration von 4,5 Gewichts-% in der Reaktionsmischung. Die Temperatur der Reaktionsmischung steigt innerhalb von 140 min. nach dem Ende der Salpetersäurezugabe auf ein Maximum von 91°C, und der Druck steigt und wird auf 4 bar begrenzt. Es entsteht eine Suspension des Hämatits, aus der nach Filtration und Trocknung des Rückstandes 4,38 kg feinteiliger Hämatit erhalten werden. Der so erhaltene Hämatit weist eine BET-Oberfläche nach DIN 66131 von 131 m²/g auf. Der molare Umsatzfaktor an metallischem Eisen bezogen auf die eingesetzte Salpetersäure beträgt 0,96.

### Vergleichsbeispiel 5:

319 g (5,71 mol) Eisen-Stanzbleche (Dicke 1,6 mm) werden in 3,2 kg Wasser vorgelegt und auf 95°C erwärmt. 803 g 29,9 gew.%ige Salpetersäure (3,81 mol) werden innerhalb von 80 min. mit einer Zugaberate von 10 g/min. zugegeben. Die Menge an zugegebener Salpetersäure entspricht einer berechneten Anfangskonzentration von 6 Gewichts-% in der Reaktionsmischung. Die Temperatur der Reaktionsmischung steigt innerhalb von 1 min. nach dem Ende der Salpetersäurezugabe auf ein Maximum von 99°C, und der Druck steigt und wird auf 4 bar begrenzt. Es entsteht eine Suspension des Hämatits, aus der nach Filtration und Trocknung des Rückstandes 320 g feinteiliger Hämatit erhalten werden. Der so erhaltene Hämatit weist eine BET-Oberfläche nach DIN 66131 von 83 m²/g auf. Der molare Umsatzfaktor an metallischem Eisen bezogen auf die eingesetzte Salpetersäure beträgt 1,22.

### Vergleichsbeispiel 6

5,42 kg (97,1 mol) Eisen-Stanzbleche (Dicke 2 mm) werden in 68 kg Wasser vorgelegt und auf 80°C erwärmt. 12 kg 30 Gew.%ige Salpetersäure (57,1 mol) werden innerhalb von 10 min. mit einer Zugaberate von 1190 g/min. zugegeben. Die Menge an zugegebener Salpetersäure entspricht einer Konzentration von 4,5 Gewichts-% in der Reaktionsmischung. Die Temperatur der Reaktionsmischung steigt innerhalb von 10 min. nach dem Ende der Salpetersäurezugabe auf ein Maximum von 83°C. Es entsteht eine Suspension des Hämatits, aus der nach Filtration und Trocknung des Rückstandes 3,9 kg feinteiliges Hämatit erhalten werden. Der so erhaltene Hämatit weist eine BET-Oberfläche nach DIN 66131 von 166 m²/g auf. Der molare Umsatzfaktor an metallischem Eisen bezogen auf die eingesetzte Salpetersäure beträgt 0,86.

### Beispiel 7 (Eisenoxid- Rot-Pigment)

367 g Eisen, 0,66 mol der Suspension des feinteiligen Hämatit aus Beispiel 1 (entsprechend 15 g/l bezogen auf das Reaktionsvolumen zu Reaktionsbeginn), 1,56 mol Fe(NO₃)₂ (40 g/l bezogen auf das Reaktionsvolumen zu Reaktionsbeginn) werden vorgelegt und mit Wasser auf ein Volumen von 7 l aufgefüllt. Die Reaktionsmischung wird auf 85°C erwärmt und unter 52,5 l/h Luftbegasung über 72 Stunden aufgebaut. Das Pigment wird filtriert, und auf weniger als 2 mS Leitfähigkeit gewaschen, und bei 80°C im Trockenschrank getrocknet. Es wurde ein Hämatit-Rot-Pigment aufgebaut.

## Patentansprüche

1. Verfahren zur Herstellung von feinteiligem Hämatit mit einer Teilchengröße kleiner als oder gleich 100 nm und einer spezifische BET-Oberfläche von 40 m²/g bis 150 m²/g, (gemessen nach DIN 66131), umfassend zumindest die Schritte
a) Bereitstellen einer Mischung von metallischem Eisen und Wasser mit einer Temperatur von 60 bis 120°C,
b) Zugabe von verdünnter Salpetersäure zu der Mischung aus Schritt a), wobei die Reaktionsmischung eine maximale Temperatur von 105 bis 160°C erreicht
c) Abtrennung der wässrigen Suspension von feinteiligem Hämatit von gegebenenfalls nicht umgesetztem, metallischen Eisen
d) gegebenenfalls Isolierung des feinteiligen Hämatit aus der abgetrennten wässrigen Suspension.

2. Verfahren gemäß Anspruch 1, wobei in Schritt b) die Zugabe von verdünnter Salpetersäure mit solch einer Zugaberate zu der Mischung aus Schritt a) erfolgt, so dass die Reaktionsmischung sich innerhalb von weniger als 120 min. nach Beendigung der Salpetersäurezugabe um mindestens 15°C aufheizt.

3. Verfahren gemäß Anspruch 1 oder 2, wobei der feinteilige Hämatit eine Teilchengröße zwischen 20 und 100 nm aufweist.

4. Verfahren gemäß einem oder mehreren der Ansprüche 1 bis 3, wobei in Schritt a) das Aufheizen einer Mischung von metallischem Eisen und Wasser auf 75 bis 120°C erfolgt.

5. Verfahren gemäß einem oder mehreren der Ansprüche 1 bis 4 wobei in Schritt b) der Druck in dem geschlossenen Behälter auf über 1000 hPa ansteigt

6. Verfahren gemäß einem oder mehreren der Ansprüche 1 bis 5, wobei in Schritt b) das Verhältnis von eingesetztem Fe in mol zu eingesetzter HNO₃ in mol von größer als 1,33:1 bis 16:1 beträgt.

7. Verfahren gemäß einem oder mehreren der Ansprüche 1 bis 6, wobei in Schritt b) das Verhältnis von eingesetztem Fe in mol zu eingesetzter HNO₃ in mol von größer als 1,5 bis 4 beträgt.

8. Verfahren gemäß einem oder mehreren der Ansprüche 1 bis 7, wobei in Schritt b) das Verhältnis von eingesetztem Fe in mol zu eingesetzter HNO₃ in mol von größer als 1,33 bis 1,8 beträgt.

9. Verfahren gemäß einem oder mehreren der Ansprüche 1 bis 8, wobei die verdünnte Salpetersäure eine Konzentration von 10 bis 67 Gew.% HNO₃ aufweist, bevorzugt von 20 bis 67 Gew.-%.

10. Verfahren gemäß einem oder mehreren der Ansprüche 1 bis 9, wobei die zugegebene Menge HNO₃ bezogen auf das Gewicht der Reaktionsmischung von 2 bis 15 Gew.-% beträgt.

11. Verfahren zur Herstellung von Eisenoxid-Rot-Pigmenten, umfassend die Schritte
i. Herstellung einer wässrigen Suspension von feinteiligem Hämatit gemäß den Ansprüchen 1 bis 10,
ii. Umsetzung der wässrigen Suspension von feinteiligem Hämatit mit einem Eisensalz, einem alkalischen Fällungsmittel unter Einwirkung sauerstoffhaltiger Gase oder durch Reaktion von elementarem Eisen, einem Eisensalz und sauerstoffhaltigen Gasen zu einer Hämatit-Pigmentsuspension und
iii. gegebenenfalls Isolierung des in der Suspension enthaltenen Pigments.

12. Verfahren zur Herstellung von Eisenoxid-Rot-Pigmenten gemäß Anspruch 11, wobei, wenn in Schritt ii) die Umsetzung der wässrigen Suspension von feinteiligem Hämatit als Keim mit einem Eisensalz in Gegenwart von metallischem Eisen erfolgt, in Schritt ii) metallisches Eisen in einer Konzentration zwischen 20 und 100 g/l bezogen auf das Volumen der Reaktionsmischung zu Beginn der Reaktion eingesetzt wird.

13. Verfahren zur Herstellung von Eisenoxid-Rot-Pigmenten gemäß Anspruch 11 oder 12, wobei, wenn in Schritt ii) die Umsetzung der wässrigen Suspension von feinteiligem Hämatit als Keim mit einem Eisensalz in Gegenwart von metallischem Eisen erfolgt, Schritt ii) bei Temperaturen zwischen 70 und 100°C durchgeführt wird.

14. Verfahren zur Herstellung von Eisenoxid-Rot-Pigmenten gemäß einem oder mehreren der Ansprüche 11 bis 13, wobei, wenn in Schritt ii) die Umsetzung der wässrigen Suspension von feinteiligem Hämatit als Keim mit einem Eisensalz, einem alkalischen Fällungsmittel unter Einwirkung sauerstoffhaltiger Gase erfolgt, in Schritt ii) die Reaktionsmischung während des Aufheizens auf die Reaktionstemperatur und/oder während der Reaktion mit einem sauerstoffhaltigen Gas, bevorzugt Luft, zwischen 1 und 30 Litern pro Stunde und Liter Reaktionsvolumen für einen Zeitraum zwischen 2 und 150 Stunden begast wird.

## Claims

1. Process for the production of finely divided haematite having a particle size of less than or equal to 100 nm and a specific BET surface area of from 40 m²/g to 150 m²/g, (measured in accordance with DIN 66131), which comprises at least the steps
a) provision of a mixture of metallic iron and water having a temperature of from 60 to 120°C,
b) addition of dilute nitric acid to the mixture from step a), wherein the reaction mixture reaches a maximum temperature of from 105 to 160°C,
c) separation of the aqueous suspension of finely divided haematite from any unreacted, metallic iron,
d) optionally isolation of the finely divided haematite from the aqueous suspension which has been separated off.

2. Process according to Claim 1, wherein, in step b), the addition of dilute nitric acid is carried out at such a rate of addition to the mixture from step a) that the reaction mixture heats up by at least 15°C within less than 120 minutes after the addition of nitric acid is complete.

3. Process according to Claims 1 or 2, wherein the finely divided haematite has a particle size in the range from 20 to 100 nm.

4. Process according to one or more of Claims 1 to 3, wherein the heating of a mixture of metallic iron and water in step a) is carried out to from 75 to 120°C.

5. Process according to one or more of Claims 1 to 4, wherein the pressure in the closed vessel rises to above 1000 hPa in step b).

6. Process according to one or more of Claims 1 to 5, wherein the ratio of Fe used in mol to HNO₃ used in mol in step b) is from >1.33:1 to 16:1.

7. Process according to one or more of Claims 1 to 6, wherein the ratio of Fe used in mol to HNO₃ used in mol in step b) is from >1.5 to 4.

8. Process according to one or more of Claims 1 to 7, wherein the ratio of Fe used in mol to HNO₃ used in mol in step b) is from >1.33 to 1.8.

9. Process according to one or more of Claims 1 to 8, wherein the dilute nitric acid has a concentration of from 10 to 67% by weight of HNO₃, preferably from 20 to 67% by weight.

10. Process according to one or more of Claims 1 to 9, wherein the amount of HNO₃ added based on the weight of the reaction mixture is from 2 to 15% by weight.

11. Process for the production of iron oxide red pigments, which comprises the steps
i. production of an aqueous suspension of finely divided haematite according to any of Claims 1 to 10,
ii. reaction of the aqueous suspension of finely divided haematite as nucleus with an iron salt, an alkaline precipitate in the presence of oxygen-containing gases or by reaction of elemental iron, an iron salt and oxygen-containing gases to give a haematite pigment suspension and
iii. optionally isolation of the pigment present in the suspension.

12. Process for the production of iron oxide red pigments according to Claim 11, wherein, when the reaction of the aqueous suspension of finely divided haematite as nucleus with an iron salt in step ii) is carried out in the presence of metallic iron, metallic iron is used in step ii) in a concentration of from 20 to 100 g/l based on the volume of the reaction mixture at the beginning of the reaction.

13. Process for the production of iron oxide red pigments according to Claim 11 or 12, wherein, when the reaction of the aqueous suspension of finely divided haematite as nucleus with an iron salt is carried out in the presence of metallic iron in step ii), step ii) is carried out at temperatures in the range from 70 to 100°C.

14. Process for the production of iron oxide red pigments according to one or more of Claims 11 to 13, wherein, when the reaction of the aqueous suspension of finely divided haematite as nucleus with an iron salt and an alkaline precipitant is carried out in the presence of oxygen-containing gases in step ii), an oxygen-containing gas, preferably air, is introduced into the reaction mixture in an amount of from 1 to 30 litres per hour and litres of reaction volume for a time of from 2 to 150 hours in step ii) during heating up to the reaction temperature and/or during the reaction.

## Revendications

1. Procédé de fabrication d'hématite finement divisée ayant une taille de particule inférieure ou égale à 100 nm et une surface spécifique BET de 40 m²/g à 150 m²/g (mesurée selon DIN 66131), comprenant au moins les étapes suivantes :
a) la préparation d'un mélange de fer métallique et d'eau à une température de 60 à 120 °C,
b) l'ajout d'acide nitrique dilué au mélange de l'étape a), le mélange réactionnel atteignant une température maximale de 105 à 160 °C,
c) la séparation de la suspension aqueuse d'hématite finement divisée du fer métallique éventuellement non réagi,
d) éventuellement l'isolement de l'hématite finement divisée de la suspension aqueuse séparée.

2. Procédé selon la revendication 1, dans lequel, à l'étape b), l'ajout d'acide nitrique dilué au mélange de l'étape a) a lieu en un taux d'ajout tel que le mélange réactionnel se chauffe d'au moins 15 °C en moins de 120 minutes après la fin de l'ajout d'acide nitrique.

3. Procédé selon la revendication 1 ou 2, dans lequel l'hématite finement divisée présente une taille de particule comprise entre 20 et 100 nm.

4. Procédé selon une ou plusieurs des revendications 1 à 3, dans lequel, à l'étape a), le chauffage d'un mélange de fer métallique et d'eau à une température de 75 à 120 °C a lieu.

5. Procédé selon une ou plusieurs des revendications 1 à 4, dans lequel, à l'étape b), la pression dans le contenant fermé est augmentée à plus de 1 000 hPa.

6. Procédé selon une ou plusieurs des revendications 1 à 5, dans lequel, à l'étape b), le rapport entre le Fe utilisé en moles et l'HNO₃ utilisé en moles est de plus de 1,33:1 à 16:1.

7. Procédé selon une ou plusieurs des revendications 1 à 6, dans lequel, à l'étape b), le rapport entre le Fe utilisé en moles et l'HNO₃ utilisé en moles est de plus de 1,5 à 4.

8. Procédé selon une ou plusieurs des revendications 1 à 7, dans lequel, à l'étape b), le rapport entre le Fe utilisé en moles et l'HNO₃ utilisé en moles est de plus de 1,33 à 1,8.

9. Procédé selon une ou plusieurs des revendications 1 à 8, dans lequel l'acide nitrique dilué présente une concentration de 10 à 67 % en poids d'HNO₃, de préférence de 20 à 67 % en poids.

10. Procédé selon une ou plusieurs des revendications 1 à 9, dans lequel la quantité d'HNO₃ ajoutée par rapport au poids du mélange réactionnel est de 2 à 15 % en poids.

11. Procédé de fabrication de pigments rouges d'oxyde de fer, comprenant les étapes suivantes :
i. la fabrication d'une suspension aqueuse d'hématite finement divisée selon les revendications 1 à 10,
ii. la mise en réaction de la suspension aqueuse d'hématite finement divisée avec un sel de fer, un agent de précipitation alcalin sous l'effet de gaz contenant de l'oxygène ou par réaction de fer élémentaire, d'un sel de fer et de gaz contenant de l'oxygène pour obtenir une suspension de pigment d'hématite, et
iii. éventuellement l'isolement du pigment contenu dans la suspension.

12. Procédé de fabrication de pigments rouges d'oxyde de fer selon la revendication 11, dans lequel, lorsqu'à l'étape ii) la mise en réaction de la suspension aqueuse d'hématite finement divisée en tant que germe a lieu avec un sel de fer en présence de fer métallique, du fer métallique est utilisé à l'étape ii) en une concentration comprise entre 20 et 100 g/l par rapport au volume du mélange réactionnel au début de la réaction.

13. Procédé de fabrication de pigments rouges d'oxyde de fer selon la revendication 11 ou 12, dans lequel, lorsqu'à l'étape ii) la mise en réaction de la suspension aqueuse d'hématite finement divisée en tant que germe a lieu avec un sel de fer en présence de fer métallique, l'étape ii) est réalisée à des températures comprises entre 70 et 100 °C.

14. Procédé de fabrication de pigments rouges d'oxyde de fer selon une ou plusieurs des revendications 11 à 13, dans lequel, lorsqu'à l'étape ii) la mise en réaction de la suspension aqueuse d'hématite finement divisée en tant que germe a lieu avec un sel de fer, un agent de précipitation alcalin sous l'effet de gaz contenant de l'oxygène, le mélange réactionnel est gazé à l'étape ii) pendant le chauffage à la température de réaction et/ou pendant la réaction avec un gaz contenant de l'oxygène, de préférence de l'air, entre 1 et 30 litres par heure et litre de volume réactionnel pendant une durée comprise entre 2 et 150 heures.
